**Europäisches Patentamt**

**European Patent Office**

**Office européen des brevets**

(19)

(11) Veröffentlichungsnummer : **0 341 721 B1**

(12) # EUROPÄISCHE PATENTSCHRIFT

(45) Veröffentlichungstag der Patentschrift :
**11.11.92 Patentblatt 92/46**

(51) Int. Cl.⁵ : **A61C 3/00,** A61C 17/02,
A61M 1/00

(21) Anmeldenummer : **89108507.8**

(22) Anmeldetag : **12.05.89**

(54) **Zahnärztliche Behandlungsinstrumente mit Saug- und Spritzvorrichtung.**

(30) Priorität : **13.05.88 DE 3816441**

(43) Veröffentlichungstag der Anmeldung :
**15.11.89 Patentblatt 89/46**

(45) Bekanntmachung des Hinweises auf die
Patenterteilung :
**11.11.92 Patentblatt 92/46**

(84) Benannte Vertragsstaaten :
**AT BE CH DE ES FR GB GR IT LI NL SE**

(56) Entgegenhaltungen :
**DE-A- 2 535 477**

(56) Entgegenhaltungen :
**DE-A- 2 939 531**
**DE-C- 673 696**
**FR-A- 2 450 597**
**FR-A- 2 588 748**
**US-A- 3 453 735**
**US-A- 3 495 593**
**US-A- 3 807 048**
**US-A- 4 043 322**

(73) Patentinhaber : **Tomic, Dobrivoje, Dr.**
**Fasangartenstrasse 159**
**W-8000 München 90 (DE)**

(72) Erfinder : **Tomic, Dobrivoje, Dr.**
**Fasangartenstrasse 159**
**W-8000 München 90 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft die Schaffung von einem zahnärztlichen Wumzelheber oder Schaber mit Saug- und Spritzvorrichtung und die Schaffung eines Zu- und Abfuhrsystems in Form eines oder zweier Kanälen und/oder Rohre für die Anwendung als Mehrzweck-Instrumente, insbesondere in der orale Chirurgie und Parodontologie, die neben ihrer zweckbestimten Nutzmöglichkeit auch das Einspritzen von Flüsigkeiten und/oder für das Absaugen und die Beseitigung von unerwünschtem harten und weichen Gewebe, Gewebsteilen, anderen Partikeln, blutigen, nekrotischen und eitrigen Massen Verwendung finden und als solche an jedes Gerät und jede Sauganlage angeschloßen werden können, wobei sie in der Zahnmedizin der Human- und Tiermedizin benüzt werden können.

In der Zahnmedizin und insbesondere in der oralen Chirurgie und Parodontologie sind Behandlungsinstrumente in verschiedenen zweckentsprechenden Formen und für bestimmten Anwendungen wie z.B. Schaben, Ablösen, Auskratzen, oder Zahn- und Wurzelentfernen längst vorhanden, wobei aber keines dieser Instrumente über ein eigenes Zu- und Abfuhrsystem zum gleichzeitigen Absaugen und Reinigen des Behandlungsfeldes verfügt.(Dental Katalog, Carl Martin, D-5650 Solingen; Dentalkatalog Gebr. Martin, D-7200 Tuttlingen; Dental Katalog Aesculap-Werke, D-7200 Tuttlingen). So manche Form und Ausführung bekannter Instrumente entspricht den neusten Behandlungsanforderungen nicht mehr. Alle diese Instrumente sind jeweils für einen bestimmten Behandlungsvorgang geschaffen, so daß eine Behandlung zusätzliche Massnahmen, Instrumente und Hilfsmittel erforderlich macht, was für den Behandlungsablauf, für den Praktiker und den Patienten von erheblichem Nachteil ist.

Der Erfindung liegt die Aufgabe zugrunde, Wurzelheber oder Schaber mit Saugund Spritzvorrichtung anzugeben, die vielzahl der bisher benötigten Instrumente und Hilfsmittel zu vermindern, den Behandlungsablauf zu vereinfachen und zu verkürzen und somit die Therapie der instrumentallen Behandlung erheblich zu verbessern, indem bei der Benützung von Behandlungsinstrumenten die geschaffene Saug- und/oder Spritzvorrichtung an eine Sauganlage und/oder Sauggerät angeschloßen werden kann.

Gegenstand der Erfindung ist ein Wurzelheber oder ein Schaber mit Saug- und Spritzvorrichtung im Form eines oder zweier Kanäle und/oder Rohre. Solche Instrumente können z.B. zum Schaben, Zahn- und Wurzelentfernen, benüzt werden und dabei zweckgeformt sind wie z.B. als Löffel, Zahnwurzelheber, und das jedes Instrument mit erfingdungsgemäßer Saug- und/oder Spritzvorrichtung als Mehrzweckinstrument auch an eine Saug- anlage und-/oder Sauggerät angeschloßen werden kann und mit seiner zweckgeschaffenen Form für die Benützung z.B. als Schaber oder Wurzelheber gegebenenfalls auch Teile der harten und weichen Gewebe, Blut, Speichel, nekrotische und eitrige Massen, Zahnwurzeln und andere Partikel aus dem Behandlungsfeld absaugen und beseitigen kann. Jedes dieser erfindungsgemäßen Wurzelheber oder Schaber mit Zu- und/oder Abfuhrsystem kann jederzeit und uneingeschränkt in seiner zweckgeschaffenen Form auch ohne Anschluß an eine Sauganlage oder Gerät benüzt werden.

Jedes der erfindungsgemäßen Instrumente weist ein oder zwei durchlaufende Rohre/Kanäle auf, von der Instrumentenspitze (distaler Teil) bis zur Auslaufstelle, welche sich am anderen (proximale) Instrumentenende oder sogar an einer anderen Stelle des Instrumentes befinden kann.Die Spitze (distaler Teil) des Instrumentes kann verschieden und zweckentsprechend geformt und geschaffen sein, wie z.B. Schaber,Löffel,Hacker, Schneide, Spitze, Spatel oder sonstige Formen und auch beschichtet sein.Die übrigen Instrumententeile können zweckentsprechend frei gestaltet werden und verschiedene Formen, Maße und Größen aufweisen. Für die Behandlung von Abszessen und parodontalen Erkrankungen oder Wunden eignen sich z.B. besonders gut erfindungsgemäße Behandlungsinstrumente in kanülenartiger Form welche als solche auch an einen anderen Griff, Halter oder Schlauch jederzeit angesezt werden können, zum Anschluß an eine Sauganlage und Gerät. Jedes dieser erfindungsgemäßen Instrumente kann an einer Stelle eine Öffnung bzw. Loch im oder am Rohr/Kanal zur Saugregelung aufweisen. Das Rohr und/oder Kanal kann gegebenenfalls auch als Zusatzteil an die Behandlungsinstrumente angebracht werden und somit als abnehmbares Stück geschaffen sein. Die Behandlungsinstrumente mit erfindungsgemäßer Saug- Spritzvorrichtung können aus verschiedenen Materialien wie Metal, Legierung,Plastik, Kunststoff, Karbon-Graphit, Keramik und beschichtet sein und die verschiedenen Instrumententeile aus verschiedenen Materialien und/oder Fertigteilen gefertigt sein und auch als Einweginstrumente oder Einwegteile hergestellt und benüzt werden.

Die folgenden Zeichnungen sollen die Erfindung und Ansprüche näher erläutern.

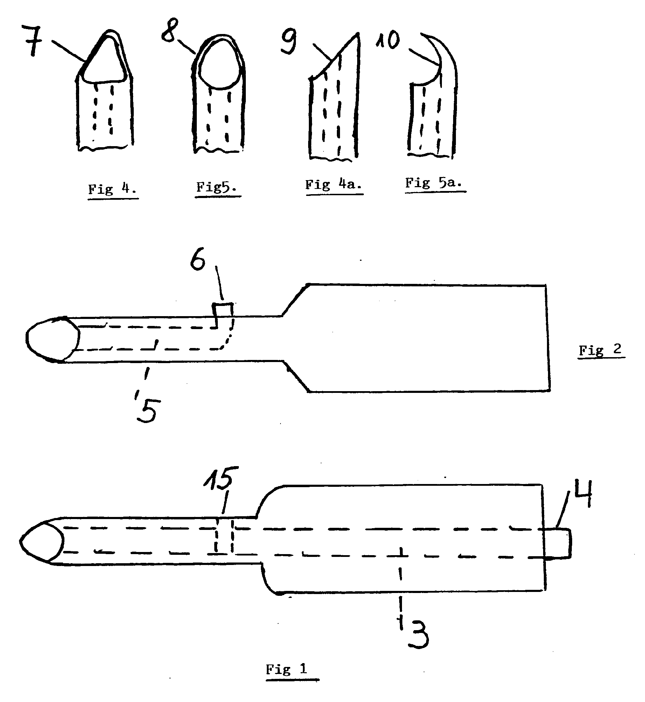

Fig. 1 zeigt die Frontalansicht eines Saugwurzelhebers gemäß der Erfindung.

Fig. 2 zeigt ein geändertes Beispiel des Saugwurzelhebers aus Fig. 1.

Fig. 4, 4a, 5, 5a stellen vergrößerte frontale und seitliche Arsichten zweier verschiedener Spitzen der zahnärztlichen Wurzelheber oder Schaber.

**Patentansprüche**

1. Zahnärztliche Schaber oder Wurzelheber dadurch gekennzeichnet, daß

a) der Schaber oder der Wurzelheber eine Vorrichtung zum Anschluß an eine Sauganlage oder Sauggerät aufweist, zum gleichzeitigen Absaugen und Reinigen im Behandlungsfeld, Spülen, Entfernen von hartem und weichem Gewebe, Gewebsteilen und anderen Partikeln, blutigen, nekrotischen und eitrigen Massen, Speicheln und anderem aufweist,

b) der Schaber oder der Wurzelheber eine Spritzvorrichtung in Form eines oder zweier Kanäle/rohre von der Instrumentenspitze bis zum anderen Instrumentenende (1,2,3,4,) oder einer anderer Auslaufstelle (5,6,) zum Anschluß an eine Sauganlage oder Sauggerät aufweist,

c) die Instrumentenspitze verschiedene und zweckentsprechende Formen (7,8,9,10) wie Schaber, Löffel, Hacker, Spatel, Schneide oder Spitze aufweist

d) das Instrument aus einem Stück (11) oder aus Teilen (12) besteht und an einen Halter oder Griff angeschloßen werden kann.

2. Wurzelheber oder Schaber nach Anspruch 1,dadurch gekennzeichnet, daß Kanal oder Rohr in- oder aussenseitig verläuft, abnehmbar sein kann und verschiedene Durchmesser aufweist.

3. Wurzelheber oder Schaber nach Anspruch 1 und 2, dadurch gekennzeichnet, daß sie teilweise oder im Ganzen kanülenartige Form (13) aufweisen.

4. Wurzelheber oder Schaber nach Anspruch 1 bis 3, dadurch gekennzeichnet, daß sie eine Öffnung (14, 15) zur Saugregelung aufweisen können.

5. Wurzelheber oder Schaber nach Anspruch 1 bis 4, dadurch gekennzeichnet, daß sie in verschiedenen zweckenstprechenden Formen, Massen und Grössen geschaffen sind.

6. Wurzelheber oder Schaber nach Anspruch 1 bis 5, dadurch gekennzeichnet, daß sie aus einem oder verschiedenen Materialien wie Metal, Legierung, Kunststoff, Karbon-Graphit, Keramik, auch beschichtet und die verschiedenen Instrumententeile aus verschiedenen Materialien und Fertigteilen geschaffen sind und auch als Einweg-Instrumente benüzt werden.

## Claims

1. Dental scraper or root elevator characterized in such way that

a) the said scraper or root elevator is showing a device for attachment to a suction unit or suction apparatus, for the simultaneous aspiration and cleaning of the treatment area, rinsing and removal of hard and soft tissue, tissue- and other particles, sanguineous, necrotic and purulent masses, saliva and others;

b) the said scraper or root elevator showing a rinsing device in the shape of a canal/pipe extending from the instrument's tip to its opposite end (1, 2, 3, 4) or to another terminating point (5, 6) to be attached to a suction unit or suction apparatus;

c) the instrument's tip is showing various and suitable shapes (7, 8, 9, 10) such as a scraper, spoon, hoe, spatula, blade or point;

d) the insrument be made of one piece (11) or of components (12) and that it can be attached to a holder or handpiece;

2. Root elevator or scraper according to claim 1, characterized in such way that the canal or pipe can run within the instrument or along its external length, that said canal/pipe can be removable and can show various diameters.

3. Root elevator or scraper according to claims 1 and 2, characterized in such way, that they show partially or entirely the shape of a cannula (13).

4. Root elevator or scraper according to claims 1 thru 3, characterized in such way, that they can show an opening (14, 15) for the regulation of suction.

5. Root elevator or scraper according to claims 1 thru 4, characterized in such way, that they are created in various suitable shapes, masses and sizes.

6. Root elevator or scraper according to clai,s 1 thru 5, characterized in such way, that they are made of one or more materials such as metal, alloys, mlastic, carbon-graphite, ceramics, that they can be coated and that the various instrument components are made of various materials and prefabricated parts and that they can also be utilized as disposable instruments.

## Revendications

1. Racloir dentaire ou extracteur de racine caractérisé en ce que ;

a/ ledit racloir ou extracteur de racine présente un dispositif destiné à être raccordé à une installation de succion ou à un appareil de succion pour l'aspiration et le nettoyage simultanés de la surface de traitement, pour le rinçage et l'évacuation de tissus durs et mous, de particules de tissus et autres, de masses sanguines, nerveuses et purulentes, de salive et autres ;

b/ ledit racloir ou extracteur de racine présente un dispositif de rinçage de la forme d'un conduit/tube s'étendant depuis la pointe de l'instrument vers son extrémité opposée (1, 2, 3, 4) ou vers un autre point terminal (5, 6) destiné à être raccordé à une installation de succion ou à un appareil de succion ;

c/ l'embout de l'instrument présente des formes diverses et appropriées (7, 8, 9, 10) telles que racloir, cuillère, grattoir, spatule, lame ou pointe ;

d/ l'instrument est fabriqué d'une seule pièce (11) ou de plusieurs composants (12) et en ce qu'il peut être fixé à un support ou à une poignée.

2. Extracteur de racine ou racloir selon la revendication 1, caractérisé en ce que le conduit ou tube peut courir à l'intérieur de l'instrument ou le long de sa longueur à l'extérieur, et en ce que le conduit/tube peut être amovible et peut présenter différents diamètres.

3. Extracteur de racine ou racloir selon l'une quelconque des revendications 1 et 2, caractérisé en ce qu'il présente partiellement ou totalement la forme d'une canule (13).

4. Extracteur de racine ou racloir selon l'une quelconque des revendications 1 à 3, caractérisé en ce qu'il peut présenter une ouverture (14, 15) pour le réglage de la succion.

5. Extracteur de racine ou racloir selon l'une quelconque des revendications 1 à 4, caractérisé en ce qu'il est créé en formes, nombres et dimensions divers appropriés.

6. Extracteur de racine ou racloir selon l'une quelconque des revendications 1 à 5, caractérisé en ce qu'il est fabriqué en un ou plusieurs matériaux tels que métaux, alliages, plastique, carbone-graphite, céramique, en ce qu'il peut être revêtu et en ce que les divers composants de l'instrument sont fabriqués en matériaux divers et en pièces préfabriquées, et en ce qu'il peut être également utilisé comme instrument jetable.

7

8

9

10

Fig 4.    Fig5.    Fig 4a.    Fig 5a.

6

5

Fig 2

15

4

3

Fig 1